# EUROPEAN PATENT APPLICATION

(11) **EP 1 312 437 A1**
(43) Date of publication of application: **21.05.2003**
(21) Application number: 01127534.4
(22) Date of filing: 19.11.2001
(51) Int. Cl.: B23P 6/00

(54) **Crack repair method**

(71) Applicant: ALSTOM (Switzerland) Ltd, 5401 Baden (CH)
(72) Inventor: Ullmann, Oliver, 5408 Ennetbaden (CH); Bögli, Andreas, 5430 Wettingen (CH); Fernihough, John, Dr., 5408 Ennetbaden (CH)

(57) **Abstract**

A method is disclosed of repairing cracks (5) on a surface (6) of a component (1) such as gas turbine components. The method comprises the steps of repairing the cracks (5) of the component by brazing, detecting by any means remaining cracks (5) on the surface (6) or below the surface (6), which were not properly filled with braze material (7) during the repair brazing operation and repairing the crack zones with a focussed low-heat input welding method using an appropriate weld filler material (10).

## Description

### FIELD OF THE INVENTION

The invention relates to a repair method of cracks on the surface of a component such as gas turbine articles.

### BACKGROUND OF THE INVENTION

This invention relates to the repair of gas turbine components after being exposed to the conditions of engine operation. For example, turbine blades, vanes, combustors, burners, heat shields are all subject to large thermal gradients and high temperatures during engine operation, with each engine operating cycle giving rise to a new stress cycle in the component. This cyclic stressing at high temperature gives rise to the well known Low Cycle Fatigue and/or Thermal-Mechanical Fatigue modes of cracking in critical areas of high stress.

Although the materials chosen for the manufacture of these articles are normally high strength nickel based superalloys, the extreme loading cycles often give rise to limited cracking within the components during the normal allowed engine operating interval of the components. In addition, the high temperatures give rise to creep deformation and oxidation. The maximum allowed engine operating interval is defined in both cycles and operating hours, since crack growth is a function of the number of cycles, and the extent of creep deformation and oxidation is a function of the number of operating hours. In order to prepare the components for the next operation interval, the cracks must be repaired, otherwise they would continue to grow to unacceptable lengths possibly leading to failure of the component in service.

Those skilled in the art are familiar with the welding and brazing processes commonly used to repair cracks in such components. Welding processes such as Tungsten Inert Gas (TIG) or Plasma are often used, with or without preheating of the component. Brazing is state-of-the-art, and uses off-the-shelf mixes of alloy powder and melting point depressants such as Si and B, as disclosed in patent US-A-5,240,491.

Fluoride Ion Cleaning (FIC) is a well known preparation treatment for brazing, as it removes oxides from the crack inner surfaces and allows complete wetting of the braze material for a high quality repair as disclosed in US-A-4,098,450. However, EP-A2-0 813 930 also discloses the use of Fluoride Ion Cleaning to prepare the component for welding since the depletion of gamma prime in the surface layers of the alloy will help avoid cracking during the repair of shallow cracks. One of the advantages of brazing over welding is that little residual stresses remain after the brazing process, while welding leaves quite large residual stresses. US-A-4,611,744 discloses the repair of turbine blades in which controlled heating is applied to the blade during and/or after the repair by welding or brazing, in order to minimize residual thermal stresses in the component. In addition, it is commonly known that applying a stress relief heat treatment before carrying out the repairs also allows for a higher quality repair.

For cracks with large widths, "wide gap" brazing techniques can be applied, with a substantial portion of the braze filler material being essentially the same material as the component and including a low melting portion, as disclosed in US-A-5,156,321.

One known disadvantage of crack repair by welding is that many of the alloys currently used for gas turbine components contain high amounts of gamma prime forming elements (Ti, Ta, Al) which increase the tendency for cracking during solidification. This is recognized in US-A-5,395,584 which discloses a repair material high in corrosion resistance but easily weldable, and also in patent US-A-6,131,800 which discloses the addition of weld filler material different from the component material (more easily weldable) to be used in manufacturing. US-A-5,897,801 also discloses a method of crack repair of limited ductility superalloys by TIG welding with special stress relieving heat treatments.

More advanced welding repair procedures relate to the use of low-heat input welding methods such as laser or micro-plasma which are particularly useful for crack sensitive alloys such as single-crystal or columnar grained alloys. Such a repair procedure, using micro-plasma on a component with oriented microstructure and including pre-heating to a suitable temperature, is disclosed in US-A-6,084,196. More advanced brazing procedures include the use of special high melting formulations, suitable for use with single crystal or columnar grained components, as disclosed in US-A-5,523,170.

However, none of the prior art discusses the significance of the occurrence of multiple cracks in close proximity, sometimes known as spider cracks. Multiple crack repair by welding is extremely difficult because the thermal stresses imparted to the component during the repair of one crack tend to further open the neighbouring cracks, or re-open them when they have been freshly welded. Clearly, brazing is an advantage since normally only 2 brazing cycles are required to close many cracks on opposing faces of the component (only 1 braze cycle is needed to close cracks occuring on only one face). However, it is common for some cracks to not wet completely, particularly at their extremities, even after a cleaning procedure was carried out on the cracks prior to repair.

In these cases, a second braze cycle would be carried out to ensure complete filling of the cracks, without any guarantee that they would properly fill. It is also common for cracks to braze only superficially (on the top surface) while remaining open deeper in the component. Historically such remaining cracks passed visual inspection methods, but new sub-surface detection methods allow their detection, giving rise to an even higher rate of rejection (requiring rework) from a repair brazing cycle. Thus, the component may require multiple brazing cycles, each of which is time consuming, costly, and exposes the component to temperatures high enough to adversely affect its microstructure and possibly compromise the quality of the previous braze repairs.

### SUMMARY OF THE INVENTION

The principle object of the invention is to provide means for repairing unfilled or partly filled cracks after a crack repair braze cycle in a more rapid and inexpensive manner. There is also a need for repairing defective braze repairs containing sub-surface defects now becoming detectable with new Non Destructive Testing (NDT) methods.

According to the invention a method was found of repairing cracks on the surface of a component, the method comprising the steps of
(a) repairing the cracks of the component by brazing,
(b) detecting by any means remaining cracks or other defects in the braze on the surface or below the surface, which were not properly filled with braze material during the repair brazing operation and
(c) repairing the remaining crack or braze defect zones with a focussed low-heat input welding method using an appropriate weld filler material.

The method uses a highly focussed low heat input method of welding such as laser or micro-plasma welding to complete the closure of the cracks left open after the repair brazing operation. The careful use of the focussed low-heat input welding method has the advantages that it minimizes cracking in the parent material, minimizes weld-braze interaction, minimizes stress-induced cracking in the newly braze-repaired portions of the crack and allows the use of conventional braze materials in the repair procedure. This method has further advantages in that it allows the completion of the crack repair much more quickly than by repeated brazing cycles to close the remaining defects or unfilled cracks.

According to an advantageous embodiment of the invention between the step of detecting remaining cracks and the step of the micro-plasma welding can at least a portion of at least one of remaining unfilled cracks or crack portions or braze defect zones locally removed. This could be done up to a predetermined depth ranging from 0.2 to 3 mm or, if the brazed crack has a subsurface defect in the braze material, the upper braze material is only removed down until the braze defect is reached or completely removed. Another option would be to remove a partly braze-filled crack up to the level of good quality braze and then welded over.

Before the step of brazing the component can be prepared for the braze repair including some method of cleaning the cracks such as Flouride Ion Cleaning or Salt bath cleaning. A step of cleaning can as well be applied after the braze repair Flouride Ion Cleaning as means for weld preparation. The welding method can include the use of laser welding, micro-plasma welding and plasma transferred arc welding. To relieve residual stresses from the welding procedure a heat treatment can applied after the welding procedure.

According to one embodiment of the invention the treated component is a single crystal or a columnar grained article used for gas turbine applications and made from a nickel base super alloy. The structure of one or both the braze and the weld can be grown epitaxially to the structure of the component to provide a single crystal structure that is aligned with the oriented microstructure of the component, thereby achieving the maximum possible strength of the repaired zone.

### BRIEF DESCRIPTION OF THE DRAWINGS

Preferred embodiments of the invention are illustrated in the accompanying drawings, in which
- **Fig. 1**: shows a gas turbine blade,
- **Fig. 2 - 6**: show different steps in the repair operation according to the invention.

The drawings show only the parts important for the invention. Same elements will be numbered in the same way in different drawings.

### DETAILED DESCRIPTION OF THE INVENTION

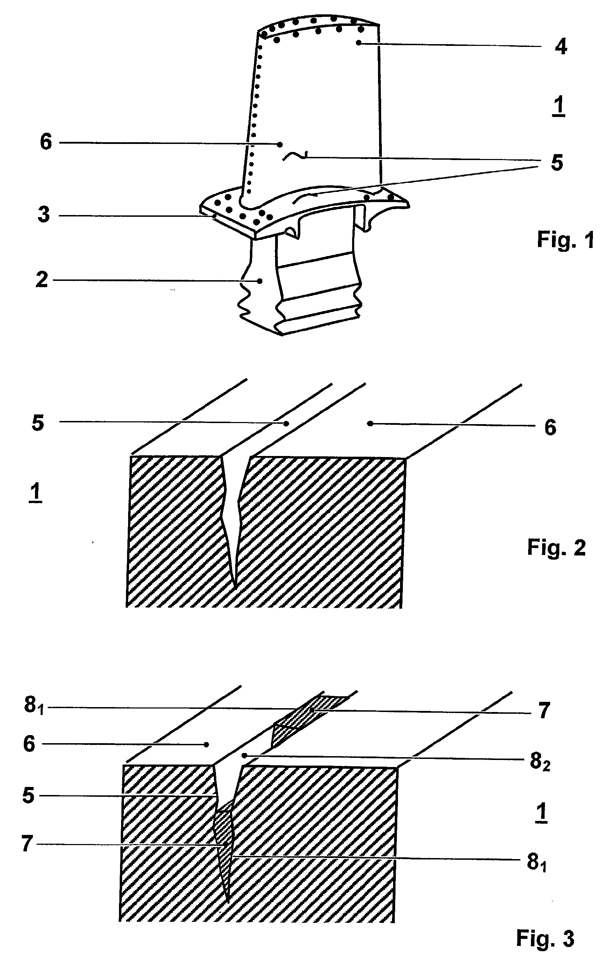

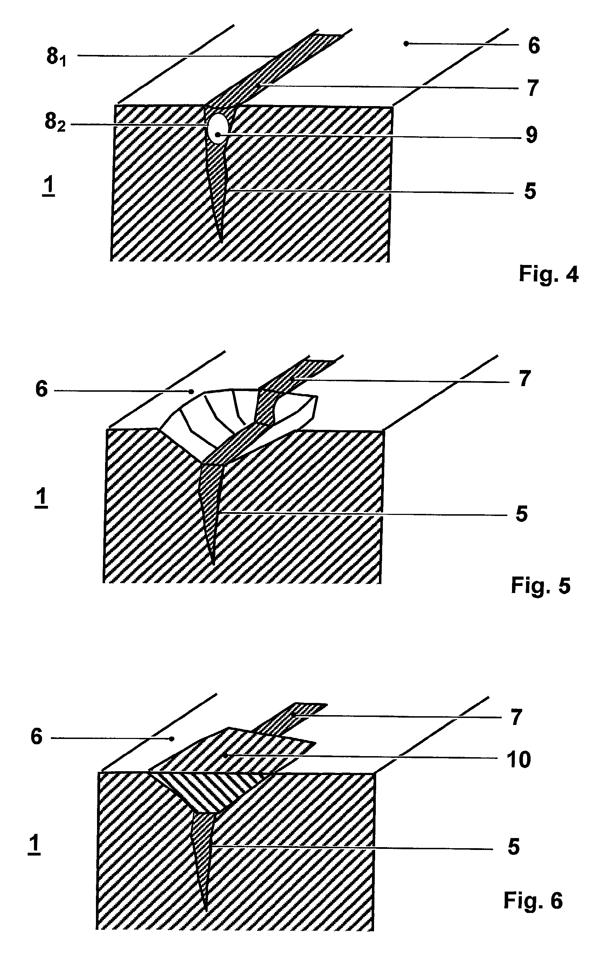

Figure 1 shows a component 1 such as blades or vanes of gas turbine engines, the gas turbine blade comprising a root portion 2, a platform 3 and a blade 4. The component 1 exhibits cracks 5 somewhere on a surface 6 after being exposed to the hot gases of the gas turbine. Figures 2 to 6 show the different steps of repair operation according to the present invention.

As shown in detail and in way of an example in figure 2 the surface 6 of the component 1 exhibits a crack 5 which has to be repaired. The component 1 can be prepared for braze repair by cleaning of the surface using abrasive means such as grit blasting or grinding to remove at least a portion of the old coating or other debris, oxidation or corrosion products, or other contaminants, and by cleaning the cracks 5 using any means known in the state of the art such as Floride Ion Cleaning (FIC), other halide cleaning, hydrogen cleaning, salt bath cleaning, any combination thereof or other means. The crack 5 is subsequently repaired by any kind of brazing known from the state of the art and using an appropriate brazing filler material 7. The result is shown in figure 3. Some locations 8₁ are repaired by the brazing operation in an adequate manner and the brazing material 7 filled the crack 5 properly, whereas other locations 8₂ shows defects in braze. As shown in figure 4 this case may be as well any kind of subsurface braze defect 9. Thus, the remaining cracks 5 or braze defects 9, which were not properly filled with braze material 7 during the repair operation, are detected by any means (visual, e.g. using Florescent Penetrant Inspection or other, e.g. using electromagnetic or ultrasonic methods) on the surface 6 or below the surface 6.

As seen from figure 5 the remaining unfilled cracks 5 or crack portions can optionally grinded out up to a predetermined depth ranging from 0.2 to 3 mm. The depth depends on the loading and geometry of the local area. A partly braze-filled crack 5 is only removed down to the level of good quality braze material 7, and then welded over. If the brazed crack 5 has a subsurface defect 8 in the braze material 7, the upper braze material 7 is only grinded down until the braze defect 8 is reached or completely removed, before micro-plasma welding is started.

As seen in figure 6, the crack zones are subsequently repaired with a welding method using an appropriate weld filler material 10. The method according to the present invention uses a highly focussed low heat input method of welding such as laser welding, micro-plasma welding or plasma transferred arc welding (PTA) on lower current levels to complete the closure of the cracks 5 left open after the repair brazing operation.

The careful use of the focussed low-heat input welding method has the advantages that it minimizes cracking in the parent material, minimizes weld-braze interaction, minimizes stress-induced cracking in the newly braze-repaired portions of the crack 5 and allows the use of conventional braze materials 7 in the repair procedure. This method has further advantages in that it allows the completion of the crack repair much more quickly than by repeated brazing cycles to close the remaining defects 9 or unfilled cracks 5.

To relieve residual stresses from the welding procedure a heat treatment can be applied after the welding procedure.

According to one embodiment of the invention the treated component is a single crystal or a columnar grained article used for gas turbine applications and made from a nickel base super alloy. The structure of one or both the braze and the weld can be grown epitaxially to the structure of the component to provide a single crystal structure that is aligned with the oriented microstructure of the component, thereby achieving the maximum possible strength of the repaired zone.

### Example of the invention

As an example, the inventive method was carried out on a trial basis on stator vanes made of the commercially available Ni based alloy IN738LC (comprising wt.-% about 16% Cr, 8.5% Co, 1.75% Mo, 2.6% W, 1.75% Ta, 0.9% Nb, 3.4% Al, 3.4% Ti, 0.04% Zr, 0.01% B, 0.11% C, balance Ni) using (on a trial basis) commercially available braze alloys with B contents below 2.5%. Prior to brazing the stator vanes were cleaned using abrasive techniques (grinding, grit blasting etc.), a chemical wash, and Floride Ion Cleaning. The braze pastes were applied and the vanes heated in a vacuum furnace to maximum temperatures ranging from 1100°C to 1220°C for times ranging from 10 to 40 minutes, followed by a diffusion heat treatment at a temperature ranging from 1080°C - 1140°C for times ranging from 200 to 400 minutes. Excess braze material was removed abrasively and the parts were cleaned and prepared for inspection. Inspection was carried out using visual (flourescent penetrant inspection) in addition to subsurface detection techniques. All detected unfilled cracks and defects were ground down to the depth of good braze material and/or a specified depth and prepared for welding. Welding was carried out directly on the braze/IN738 interface using a small DC-pulse plasma welding unit and commercially available weld wire such as IN625 comprising wt.-% about 21.5% Cr, 8.5% Mo, 4.0% Nb, 0.2% Al, 0.2% Ti, 2.5% Fe, 0.06% C, balance Ni. The plasma gas flow comprised argon with 4-7% hydrogen at a flow rate below 1.2 litres per minute. Welding current was in the range of 1-20 A with the DC pulse frequency between 0 and 1 kHz.

### NUMBERING

- **1**: Component, e.g. blades or vanes for gas turbines
- **2**: Root portion
- **3**: Platform
- **4**: Blade
- **5**: Crack
- **6**: xSurface of component 1
- **7**: Braze material
- **8**_{**1**}: xLocation with braze material 7
- **8**_{**2**}: Location without braze material 7 or with braze defect 9
- **9**: Braze defect
- **10**: Welding material

## Claims

1. A method of repairing cracks (5) on a surface (6) of a component (1), the method comprising the steps of
(a) repairing the cracks (5) of the component by brazing,
(b) detecting by any means remaining cracks (5) or other defects in the braze on the surface (6) or below the surface (6), which were not properly filled with braze material (7) during the repair brazing operation and
(c) repairing the remaining crack (5) or braze defect zones with a focussed low-heat input welding method using an appropriate weld filler material (10).

2. The method according to claim 1, wherein
between step (b) and (c) at least a portion of at least one of the remaining unfilled surface or subsurface cracks (5) or crack portions or braze defect zones are locally removed.

3. The method according to claim 2, wherein
the remaining unfilled cracks (5) or crack portions are locally removed up to a predetermined depth ranging from 0.2 to 3 mm.

4. The method according to claim 2, wherein
the brazed crack (5) has a subsurface defect in the braze material (7) and the upper braze material (7) only removed down until the defect is reached or completely removed, before the welding is started.

5. The method according to claim 2, wherein
a partly braze-filled crack (5) is only removed up to the level of good quality braze and then welded over.

6. The method according to claim 1, wherein
after the step (c) a heat treatment is applied to relieve residual stresses from the welding procedure.

7. The method according to claim 1, wherein
before step (a) of claim 1 the component (1) is prepared for braze repair.

8. The method according to claim 7, wherein
the preparation for braze repair includes some method of cleaning the cracks (5).

9. The method according to claim 8, wherein
the method of cleaning the cracks (5) includes Flouride Ion Cleaning or salt bath cleaning.

10. The method according to claim 1, wherein
after the braze repair Flouride Ion Cleaning is applied as means for weld preparation.

11. The method according to claim 1, wherein
the welding method includes the use of laser welding, micro-plasma welding or plasma transferred arc welding.

12. The method according to claim 1 to 11, wherein
the component (1) is a single crystal or a columnar grained article.

13. The method according to claim 12, wherein
the structure of the braze has grown epitaxially with the oriented microstructure of the component (1).

14. The method according to claim 12, wherein
the structure of the weld has grown epitaxially with the oriented microstructure of the component (1).

15. The method according to any of the claims 1 to 14, wherein
the component (1) is gas turbine component made from a nickel base super alloy.
